# EUROPEAN PATENT SPECIFICATION

(11) **EP 3 148 157 B1**
(45) Date of publication and mention of the grant of the patent: **06.12.2017**
(21) Application number: 15186238.0
(22) Date of filing: 22.09.2015
(51) Int. Cl.: H04L 29/08, G06F 3/048, G06F 11/34, H04W 48/18

(54) **METHOD AND SYSTEM OF IDENTIFYING AN ACCESS REQUEST OF AN APPLICATION ON A MOBILE DEVICE IN A TELECOMMUNICATION NETWORK**
VERFAHREN UND SYSTEM ZUR IDENTIFIZIERUNG EINER ZUGRIFFSANFORDERUNG EINER ANWENDUNG AUF EINER MOBILEN VORRICHTUNG IN EINEM TELEKOMMUNIKATIONSNETZ
PROCÉDÉ ET SYSTÈME D'IDENTIFICATION D'UNE DEMANDE D'ACCÈS D'UNE APPLICATION SUR UN DISPOSITIF MOBILE DANS UN RÉSEAU DE TÉLÉCOMMUNICATION

(43) Date of publication of application: 29.03.2017
(73) Proprietor: Comptel OYJ, 00180 Helsinki (FI)
(72) Inventor: Alisawi, Rami, 02230 Espoo (FI)
(74) Representative: Berggren Oy, Helsinki & Oulu

(56) References cited:
- EP-A2- 2 346 211
- US-A1- 2011 314 145

## Description

### TECHNICAL FIELD

The invention is concerned with a method and system for identifying an application executed on a mobile device to a telecommunication network.

### BACKGROUND

Mobile devices, such as smart phones, mobile phones, tablet computers, feature phones, computers, smart watches, and other handheld devices or in general any electronic device with processor, UI, input device and radio capability usually allow access to a variety of application programs. Application programs, also known as just applications or apps, are usually designed to help users to perform a specific task.

Typically, the applications communicate over the Internet independently of any other application executed on the mobile device such as a browser, an e-mail program, a Facebook® app, or a Skype® app that communicates independently with a remote server.

There are some methods for offering an internet connection for mobile devices trying to connecting an application.

In order to achieve such a feature technically, it should be possible to detect whether the application that the user is interacting with needs mobile data access and which that application is.

Typically, such technical features demands intercepting mobile data traffic, which is possible on e.g. user-space application programs, like iptables, which allows a system administrator to configure the tables of rules in devices using the Linux kernel operating system. Also the Android operating system for tablet computers and smartphones is based atop the Linux kernel.

The iptables program, however, requires rooting the mobile device, which is not feasible for commercial launch, since rooting gives the ability (or permission) to alter or replace system applications and settings, run specialized apps that require administrator-level permissions, or perform other operations that are otherwise inaccessible to a normal Android user. Another method for intercepting mobile traffic is to make use of Virtual Private Network (VPN) implementations. Implementing VPN, however, involves high degree of complexity, introduces limitations, alters the data traffic, and is not user friendly due to VPN setup. Such VPN implementations may also prevent using the key services offered by a VPN connection, which is to connect privately and securely to a site, service or Internet.

Both the above mentioned ways are considered security violent as they can be used for Man-In-The-Middle (MITM) attacks and require a high level of end user trust to allow traffic interception.

Still other solutions for capturing and identifying the type of applications on a mobile device exist. EP patent application EP 2346211 discloses The list of wireless local area network (WLAN) available to WLAN client device is displayed on the WLAN client device. The WLAN currently connected to client device is displayed first in the list regardless of received signal strength. The list of other WLAN is displayed in decreasing order of received signal strength. US patent application 2014/0214921 mentioned as prior art discloses a solution for allowing identification of mobile applications being executed on a mobile device. A request to execute an application by the mobile device is captured by an agent that generates metadata of the application and identifies the internet resource destination. All requests captured by the agent are forwarded to a proxy server or sent directly to their destination. The solution is constructed to follow up applications executed via an established internet connection in order to help application developers in identifying the type of applications executed on mobile phones since they are interested in e.g. determining which of their applications have been accessed versus the applications of their competitors.

US patent application 2012/0254285 discloses a method for management of communication from a mobile device capable of multitasking. The method includes an agent, which captures a request from at least one application executed on the mobile device for data communication through a network interface of the mobile device. The application is identified and the access rights of the identified application are determined. The agent is responsible to communicate with the network interface. The solution is constructed to follow up applications executed via an established internet connection in order to manage and reduce the amount of data and bandwidth. As the agent communicates through the network interface, or relays the traffic, the methods require capturing and forwarding or re-routing the traffic.

As each application communicates separately with a remote server, the task of identifying the type of applications on a mobile device requires e.g. mapping of each packet opened to the Process Identifier (Process ID), a number used by most operating system kernels to uniquely identify an active process. This number may be used as a parameter in various function calls allowing processes to be manipulated.

There is, therefore, a need for a more simple solution for identifying whether an application that the user is interacting with needs mobile data access in order to show offers for internet connection and for identifying which that application/app is.

### SUMMARY

The invention is concerned with a method of identifying access request of an application on a mobile device in a telecommunication network. The method comprises steps as performed by an agent in the mobile device. On-going processes in the mobile device are detected with respect to detecting one or more of the on-going processes to involve traffic over the telecommunication network. A user interaction process is identified from all the on-going processes. It is then confirmed that the identified user interaction process is the same as said process that involves traffic over the telecommunication network. Information of the identified user interaction process is then collected regarding network access needs.

The user interaction with the process/application's interface might require generation of traffic over the telecommunication network. Therefore, the process is preferably monitored and analyzed with respect to factors to evaluate network access needs.

The system of the invention comprises an agent in a mobile device with means for performing the steps of the method of the invention.

Different embodiments of the invention have the characteristics of the sub claims.

The invention can successfully be used to generate a real-time trigger for contextual data access offers without actually intercepting the traffic, but rather monitoring different processes in a mobile device including incoming and outgoing traffic and communication.

The monitoring is an on-going processes, wherein additional steps will be taken when a foreground process in a mobile device attempts for network access while the user is interacting with an application. An agent monitors e.g. byte and/or packet counts, radio state, data flow (or data activity), foreground processes and optionally device screen state and filters out any background data that is not based on user interactions. The method may be enhanced by analyzing the device screen state and performing the method only when the mobile device screen is on.

The ability to show offers and sell data access when a specific application attempts to use data is very useful and enables creating network connection for the data traffic to be consumed. Network access can be provided and the invention is in the first hand meant for offering a connection of the mobile device to the Internet or to a specific application or group of applications or service to the Internet by requiring the user to pay for the connection as a condition for providing the access.

In addition, the technology of the invention can be used to present advertisements, offer sponsored data or collect application analytics. A third party may e.g. sponsor or pay a specific Internet application or Internet service when a user tries to access it, or when the user performs a certain action, like for example clicking on a link, watching a video or downloading an application as required by the third party.

In the following some basic facts of technologies used in the invention is briefly described for facilitating understanding of the invention.

The Internet uses the standard Internet protocol suite comprising the Transmission Control Protocol (TCP) and the Internet protocol (IP) to interconnect computers and computer networks worldwide. The Open Systems Interconnection model (OSI Model) characterizes and standardizes the communication functions of these protocols.

The original version of the model (the OSI 7-layer model) defines seven layers, consisting of three media layers and four host layers, i.e. the 1) the physical layer (communicating with bits over a physical medium), 2) the data link layer (transmission of bits/data frames between two nodes), 3) the network layer (managing packets and datagrams including addressing, routing and traffic control), (examples IPv4, IPv6, IPsec, AppleTalk), 4) the transport layer protocols (reliable transmission of data segments between points on a network) (examples TCP, UDP), 5) the session layer (managing data in communication sessions, i.e. continuous exchange of information), 6) the presentation layer (translation of data between a networking service and an application; including character encoding, data compression and encryption/decryption), and 7) the application layer (High-level APIs, like HTTP FTP, SMTP, Secure Shell).

The Internet Protocol (IP) has the task of delivering packets, where data is formatted into packets (instead of bit streams), and having a payload with user data and a header for control information, from a source to a destination solely based on the IP addresses in the packet headers.

The monitoring operation in the invention notes the size of and counts the number of IP packets, and works on the network layer (OSI layer 3). It is not dependent on any layer above it since it does not read or parse the payload, so it will work for all the transport layer protocols (e.g. TCP, UDP in OSI layer 4). It is also agnostic to and works for application layer protocols (e.g. HTTP, HTTPS, FTP, SMTP in OSI layer 7), and naturally all other layers above it. Naturally, the detection is not dependent on the process or application content or payload.

With the term byte count or packet count monitored in the invention is meant a measure of the quantity of the traffic going out from the mobile device. Also inbound traffic can be monitored. Mostly quantity is measured, but also packet loss rate could be followed. The byte count or packet count also shows the number of bytes or packets having been sent in total at a given point or interval of time. The total byte count is what is followed in the first hand in the invention.

The radio state and/or the data activity of the on-going process is monitored.

The radio state is monitored in the invention to detect if the device is sending out data to the network on OSI layer 3 (the network layer), i.e. if any traffic is generated to the network at all.

The data activity is associated with a given process or all processes, i.e. if a given process or some of the processes produce(s) data to the network on OSI layer 7 (the application layer).

The data sent out based on the monitored radio state and data activity can then be used to identify if one or more of the on-going processes involves traffic over the telecommunication network. This can be identified by means of the data activity only.

The radio state is monitored to identify any activity and state of the modem in the mobile device that modulates signals for transmitting over the network. The change in the state indicates that the mobile device is transmitting data. It is an indication of the uplink or downlink traffic taking (to or from the mobile device). Monitoring both of these indications, and listening if either one takes place, will secure that any traffic can be detected with high reliability and with minimal latency. Once the data traffic is identified, it is possible to ask for data use per process to identify the process(es) that originated the data traffic. This is presented more in detail in the detailed description section.

Monitoring the mobile radio state and data activity can be an indication of uplink or downlink traffic and/or about packet access technology of the radio.

It is identified based on the data activity or lack or it whether the process in question in the mobile device transmits cellular data or Internet traffic (such as Wifi). In this connection, also the type and name of the radio communication technology might be identified, e.g. UMTS / 3G (Universal Telecommunications System/3rd generation), HSDPA (High-Speed Data Packet Access) or 4G (4^{th} generation).

The agent also monitors whether the process in the mobile device is a foreground or background process.

A process that is currently accepting input from the user of the mobile device is called a foreground process so it is the program that the user is interacting with at the present time (for example, data entry).

A background process is a computer process that runs "behind the scenes" (i.e. in the background) and without direct user intervention. Typical tasks for these processes include logging, system monitoring, scheduling, and user notification. Also the user initiated processes that the user is not currently interacting with are considered background processes.

The different programs can be in the foreground at different times because all processes, after using all of their execution time in foreground, are moved to background.

The screen state may be monitored in the invention, i.e. whether the screen is on or off. If the screen is off, it can be assumed that there is no on-going foreground process taking place. The screen of the mobile device is the user interface, for human-machine interaction, and is the space where interactions between humans and machines occur. The screen has a display as an output device for presentation of information. On display screens, the foreground consists of the characters and pictures that appear on the screen.

Mobile devices usually have a feature that allows showing a list of running process in the mobile device.

For example in the operating windows environment, the tasklist command displays a list of applications and services for all tasks running on the computer and different factors can be monitored e.g by means of Task Manager used to monitor a computer's performance that shows the programs, processes, and services that are currently running on a computer. Task Manager is included with Microsoft Windows systems and provides limited information about e.g. computer performance and running applications, processes, network activity and statistics, logged-in users, and system services.

In Linus and UNIX, which are other operating systems, the ps command is used. It provides information about the currently running processes, including their process identification numbers (PIDs). Both Linux and UNIX support the ps command to display information about all running process. The ps command gives a snapshot of the current processes.

In Android, the 'toolbox' command encapsulates the functionality of many common Linux commands, such as the ps command. However, the toolbox versions of this command has less functionality than its full-sized Linux counterpart. Also other task manager applications for Android exist, which can be used via different Activity Manager functions that interact with the overall activities running in the system, such as:
ActivityManager.RunningAppProcessInfo, giving Information to be retrieved about a running process, ActivityManager.RunningServicelnfo, giving Information to be retrieved about a particular Service that is currently running in the system, ActivityManager.RunningTaskInfo giving information to be retrieved about a particular task that is currently "running" in the system, and ActivityManager.Task Description, giving information to be set and retrieved about the current activity within the recent task list.
Next, the invention is described by means of some preferable embodiments by referring to figures. The invention is not restricted to the details of these embodiments.

### FIGURES

Figure 1 a -1e is an architectural view of the telecommunication network environment in which the invention can be implemented
Figure 2 presents the functional blocks in the mobile device belonging to the telecommunication network used in the method and system of the invention.
Figure 3 is a detailed flow scheme of a preferable embodiment of the invention
Figure 4 is a detailed flow scheme of another preferable embodiment of the invention
Figure 5 is a signal diagram for a use case of the invention

### DETAILED DESCRIPTION

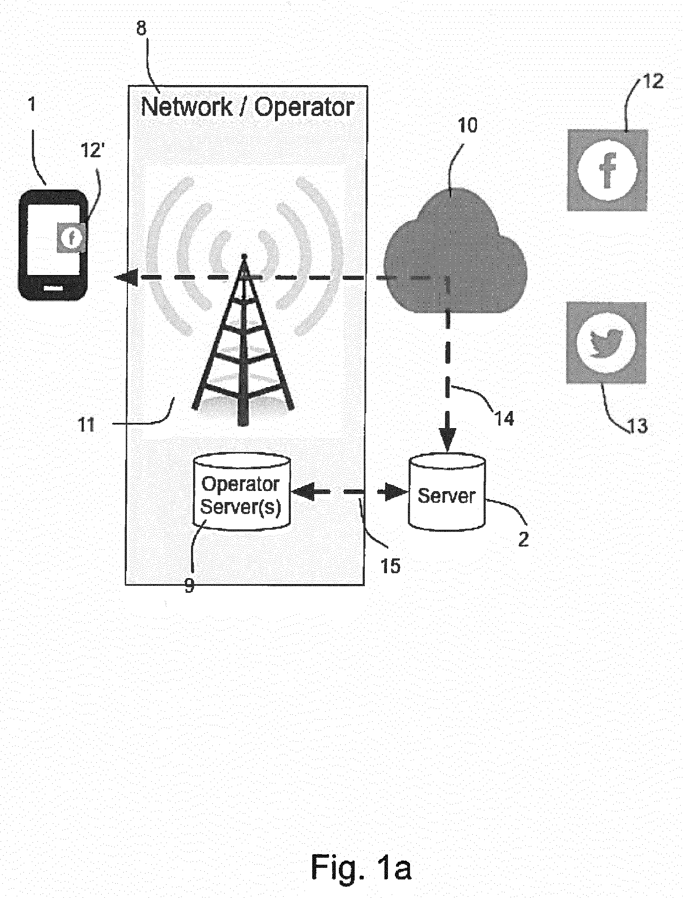

Figures 1a -1e constitute an architectural view of the telecommunication network environment in which the invention can be implemented.

The architectural view of the environment in which the invention can be implemented is according to figures 1a - 1e a client-server architecture, which is a telecommunication network architecture, wherein one or more mobile devices 1 (only one shown) are clients and reference number 2 is a server responsible for connecting an agent in the mobile device to the mobile network. The mobile device 1 is in communication with the server 2 over the operator radio network 8 and further through the Internet 10.

The operator network 8 is a cellular radio network, which is a mobile network or wireless network distributed over land areas called cells, each served by at least one fixed-location transceiver, known as base station 11.

The Internet 10 is a global system of interconnected computer networks that use the Internet protocol suite (Transmission Control Protocol / Internet Protocol, TCP/IP).

An operator server 9 is connected to those network components responsible for managing network connections for the services, offered by a service provider, which the users of the mobile devices 1 are using. The operator server 9 is also connected to other components in the mobile network 8, e.g. components handling Policy Control and Charging (PCC), Customer Relationship Management (CRM), Subscriber Profile Management (SPR), Policy and Charging Rules Function (PCRF) and Online Charging System (OCS). The server 2 can also be part of the mobile network 8. Then the connection between the server 2 and the mobile device 1 can directly be connected through the mobile network 8. In that situation, the server 2 can also act as the operator server 9.

A mobile network operator or MNO provides the services of wireless communications to the mobile device 1 over the mobile network 8 including e.g. radio spectrum allocation, wireless network infrastructure, and back haul infrastructure (the portion of the network comprising the intermediate links between the core network, or backbone network).

The mobile device 1 has access to the Internet via the mobile network 8. Thus, the base station 11 connects directly to the mobile network 8, which is both the internet service provider and a mobile phone operator or wireless provider that provides services for mobile phone users. The mobile phone operator gives a SIM card to the user of the mobile phone, who inserts it into the mobile phone to gain access to the cellular network 8.

The mobile device 1 uses a modem to communicate over the radio network 8 and the Internet 10. The modem (modulator-demodulator) modulates signals to encode digital information and demodulates signals to decode the transmitted information.

The modulated signal is transmitted easily over the networks and is decoded to reproduce the original digital data. The modem inside the mobile device 1 uses the radio network 8 (which can be e.g. General Packet Radio Service (GPRS), Universal Mobile Telecommunications System (UMTS), High-Speed Packet Access (HSPA), Evolution-Data Optimized (EVDO), or Worldwide Interoperability for Microwave Access (WiMax). The faster data rates of the newest wireless modem technologies (UMTS, HSPA, EVDO, WiMax) are also considered to be broadband wireless modems. Like mobile phones, mobile broadband modems can be SIM locked to a particular network provider.

Reference numbers 12 and 13 represent services that can be accessed via the Internet 10. In the example of figures 1a - 1e, reference number 12 is Facebook, which is an online social networking service, in which after registering to use the site, users can create a user profile, add other users as "friends", exchange messages, post status updates and photos, share videos and receive notifications when others update their profiles. Reference number 13 is Twitter, which is another online social networking service that enables users to send and read short 140-character messages called "tweets". Registered users can read and post tweets, but unregistered users can only read them. Users can access Twitter through the website interface, SMS, or a mobile device app.

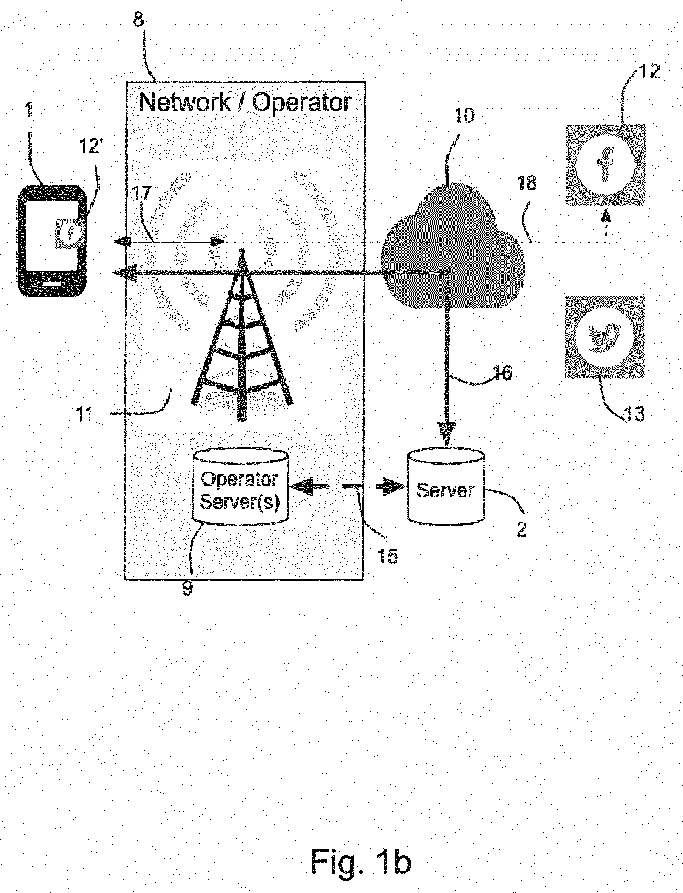

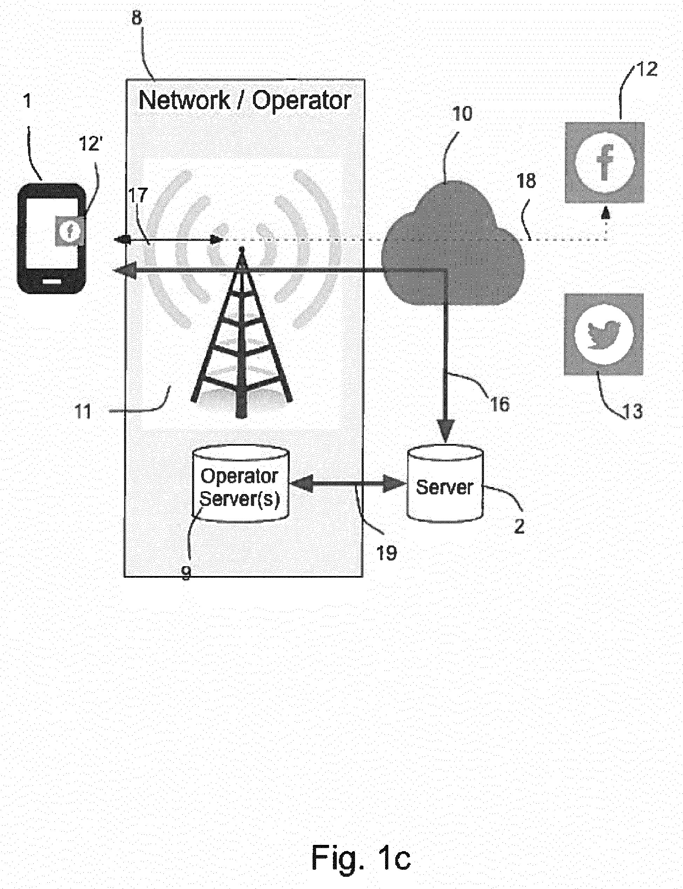

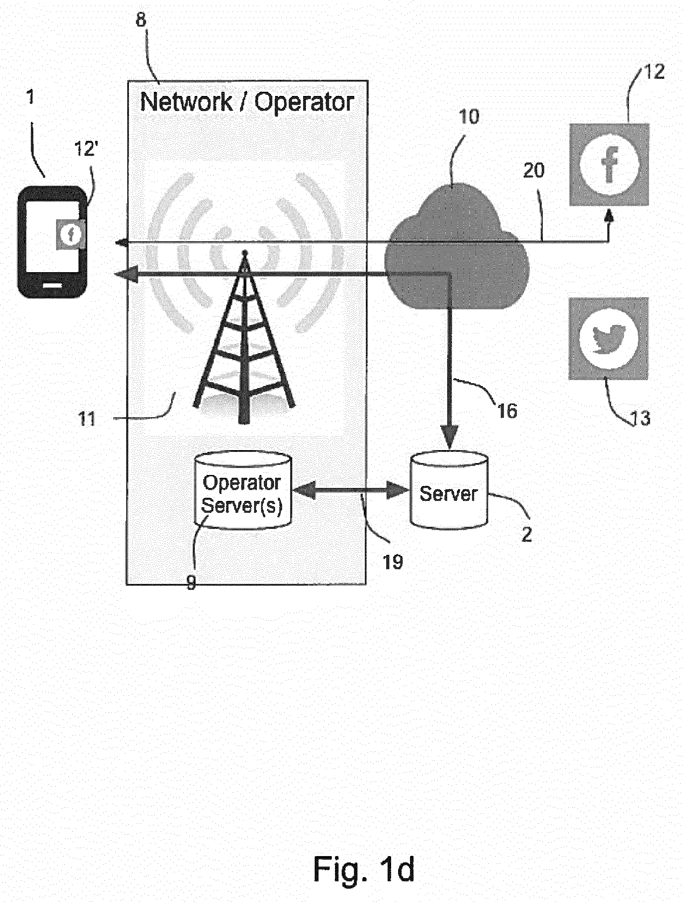

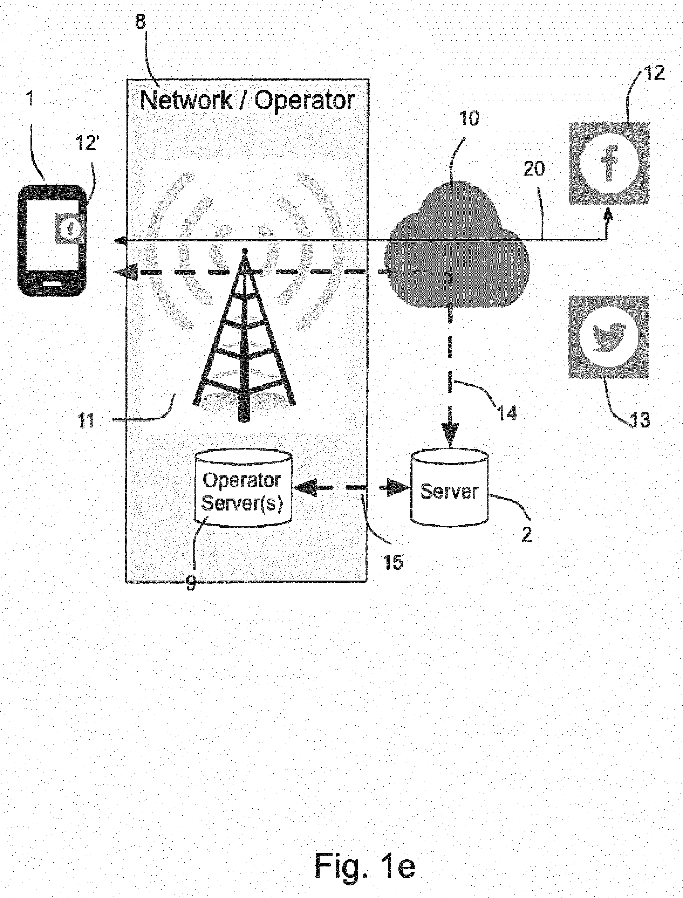

Figure 1 a shows a "data-off" situation, wherein the mobile network operator has blocked all internet traffic and there is no connection from the mobile device 1 to Facebook 12 or Twitter 13 or any other internet service.

The dotted bidirectional arrow 14 shows that there is an available connection from the mobile device 1 to the server 2 in the form of e.g. a subscription and the dotted bidirectional arrow 15 shows that there is an available connection further to the operator server 9 from the server 2. In the "data-off" situation of figure 1a, only periodic traffic in the form of control signals takes place.

Applications are installed for running in the mobile device 1. The applications might require generation of traffic over the telecommunication network.

Figure 1b shows a situation, wherein such an application in the mobile device 1 attempts for network access, while the user is interacting with that specific application, i.e. the Facebook app 12', which is installed in the mobile device as shown by reference number 12'. The user interaction with the process/application's interface 12' is here assumed to require generation of traffic over the telecommunication network and the application therefore attempts to transfer data to the network. The interaction generates radio traffic to the base station, which is indicated by the bidirectional arrow 17.

The processes and traffic of the applications running on the mobile device 1 is monitored and analyzed with respect to factors to evaluate network access needs by a client-side software agent running on the mobile device 1.

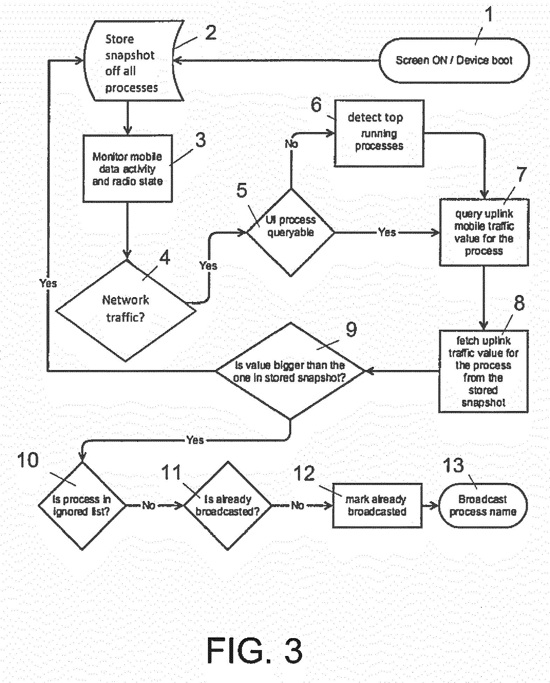

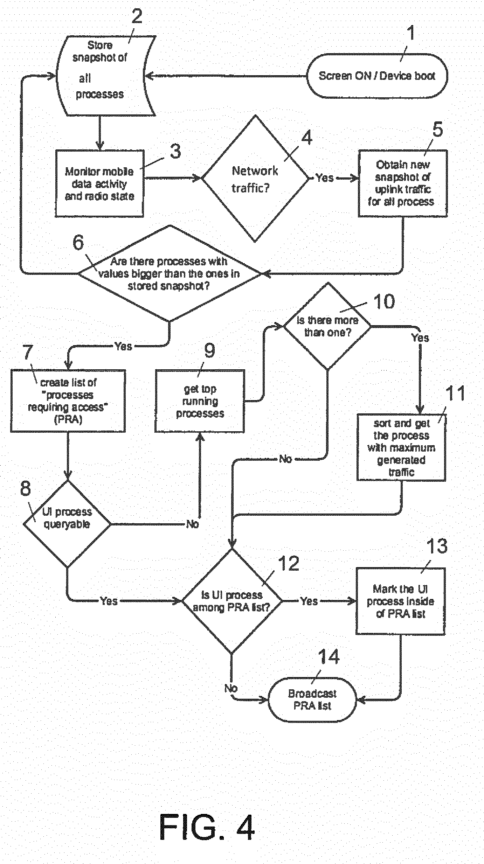

When the agent in the mobile device 1 detects that there is one or more of the on-going processes that involve traffic over the telecommunication network, the process name is identified in a way described in figure 3 or figure 4 and the agent also selects offers for network access.

The mobile device 1 then presents the offer(s) on the screen of the mobile device 1.

After the user of the mobile device 1 has accepted an offer, it is forwarded to the server 2 as a purchase request and the agent asks the server to turn data between the mobile device 1 and the requested service on (i.e. to open the internet connection between them). The communication between mobile device 1 and the server is indicated by the bidirectional arrow 16. The server 2 also asks the operator server 9 to make additional modifications to user information (for example in PCC, CRM, SPR, PCRF) based on the offer selected.

In this stage, the network 8 still blocks the internet traffic to Facebook 12, which is indicated by the dotted arrow 18 between Facebook 12 and the mobile device 1.

Figure 1c, shows a situation, wherein the server 2 approves the purchase request and instructs the operator server 9 to open the internet connection between the mobile device 1 and the requested service 12 and to turn on other functions of the procedures they need to take. This communication between the server 2 and the operator server 9 is indicated by the bidirectional arrow 19.

In Figure 1d, the operator server 9 turns the internet connection between the mobile device 1 and the requested service 12 on and this opened connection is indicated by the bidirectional arrow 20. Thus, internet traffic to the service requested by the application in the mobile device 1 is now enabled. Naturally, an internet connection can be created also to other individual services, e.g. to Twitter 13, or e.g. to allow all internet traffic to any services, including potentially access with specific Quality Of Service (QoS) parameters.

Figure 1e shows a situation, wherein internet traffic to the service requested by the application in the mobile device 1 is still enabled but as only control communication with the server 2 is needed, there is no need for constant communication between the agent on the mobile device 1 and the server 2, or between the server 2 and the operator server(s) 9, hence the communication is done for control purposes, similar to that of the situation before creating the connection to internet service(s) 12 (and 13), which is indicated with control connection dotted lines 14 and 15 respectively.

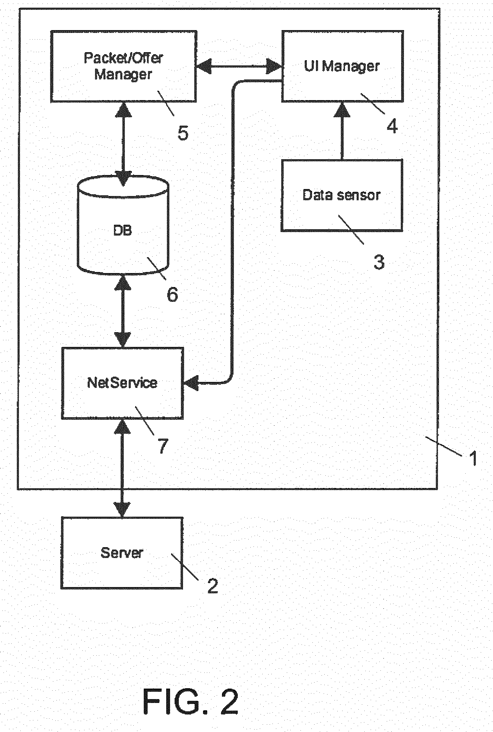

Figure 2 presents the functional blocks in the mobile device 1 belonging to the telecommunication network used in the method and system of the invention.

The mobile device 1 is presented by reference number 1 and the server 2 with reference number 2 as in figures 1a - 1e.

The mobile device 1 of the invention has an agent running in the mobile device 1. The agent is configured to monitor (follow-up) all communications to and from any of the applications in the mobile device 1 to any Internet resources by taking snapshots of all on-going processes and data communication taking place in the mobile device 1. Thus, all communication to and from any of the applications is monitored via the agent. The agent is communicatively connected to the server 2. The agent maybe an application installed on the mobile device 1 and executed thereon.

Thus, the agent can note a request to access an Internet resource by some of the other applications on the mobile device 1. The agent does, however, not intercept (capture, analyse, or send forward) the traffic.

The functionality of the agent is divided over different modules 3, 4, 5 and 6 performing the detecting, identifying, analyzing and mapping an identified user interaction process and finally selecting one or more of available network access offers and presenting them on the screen of the mobile device. The modem is not part of the agent, but the agent uses the modem to contact the network.

When the mobile device 1 sends a resource or process request to the server 2 through the net service 7 over the network connection, it is then processed and the requested access rights are granted or denied for the mobile device 1 as presented in connection with figures 1a - 1e.

The processes and traffic of the applications running on the mobile device 1 is monitored and analyzed with respect to factors to evaluate network access needs by the client-side software agent running on the mobile device 1.

The data sensor 3 of the agent in the mobile device 1 monitors on-going processes in the mobile device 1 and detects them with respect to factors as network traffic, byte/packet counts, radio state, flows in data activity, foreground processes and screen state as was explained in the summary section.

Based on these factors, it can identify that the on-going process is a user interaction process and determine whether it is a process for network communication needing internet access and find the type of process and process name, e.g. if it is a browser, an e-mail program, a Facebook® app, a Skype® app, etc.

The data sensor 3 then communicates the process/application name to other modules in the mobile device 1 and/or in the agent. One of the destination modules is the User Interface Manager 4 to which the name of the user interaction process is sent. The data sensor 3 can be used by other applications as well.

After that the data sensor 3 has identified the user interaction process for generating the data, the offer manager 5 will decide next steps.

The offer manager 5 will thus know the name of the traffic generating the user interaction process from the data sensor 3. After that the offer manager 5 analyses the process in question, e.g. with respect to historical click through rates and use/purchase of that process for this user, other previous information of the history of the process, and other factors that will impact the decision on whether to show or not to show an offer for the user and which offer. Additionally, the user context and the history of that user to that process with respect to earlier behavior will impact on the decision whether an offer is to be made. Finally, the result of the analysis is mapped to suitable available offers stored in the database 6 and the offer manager 5 then selects the best offer(s) to allocate. The offers, in the first hand, are offers for internet access but could also include offers for downloading an app (which would require connectivity) or consume content (if it is promoted etc.) or serve an advertisement and being in the form of e.g. a banner, picture, video, or audio.

The offer manager 5 retrieves the selected offers from the database 6 and presents them to the User Interface (UI) Manager 4.

The UI manager 4 presents the selected offers to the user to select and buy an offer. If the user chooses one of the shown offers, the User Interface Manager 4 will push the purchase request to the Net Service module 7 where it gets forwarded to the server 2.

The Net Service module 7 is responsible for forwarding user requests to the server. The user requests can for example be about, querying balance or submitting purchase orders. The Net Service module 7 is also responsible for requesting new offers from the server 2, or receiving and handling the offers pushed by the server 2. The Net Service module 7 saves the new offers to the database 6. The Net Service module 7 is also responsible for removing obsolete offers from the database 6.

The Server 2 provides offers and communicates with the operator network to activate an internet connection, once the user has made a successful purchase.

Figure 3 is a detailed flow scheme of an embodiment of the invention.

The whole process starts with step 1, wherein a mobile device is powered on by a user (or wherein the mobile device is booted) upon which the screen of the mobile device is turned on and some processes in the mobile device are started automatically.

In step 2, an agent in the mobile device takes a snapshot of the on-going processes of the mobile device and stores the snapshot as a data activity state of the processes in the mobile device at this particular point in time. The snapshot describes a situation of a data activity moment of the on-going processes in the mobile device and is stored in an in-memory database (IMDB) of the mobile device.

In step 3, the agent monitors the data activity and the radio state of the on-going process(es). A user initiates an app in the mobile device, whereby a user interaction starts.

In step 4, on the basis of data activity and/or radio state, it is identified whether the on-going process involves traffic over the telecommunication network. It is identified on the basis of the radio state and/or data activity whether the process in the mobile device is cellular and uses a mobile or wireless network served by at least one fixed-location transceiver (a base station) and/or whether it is Internet traffic (such as Wifi) or whether there is no communication with a network at all. In this connection, also the name of the radio communication technology might be identified, e.g. UMTS/3G (Universal Telecommunications System/3rd generation), HSDPA (High-Speed Data Packet Access) or 4G (4^{th} generation).

If the radio state of the mobile device is low (RRC_IDLE (in 4G), RRC_IDLE and PCH as LOW (in 3G) for example), the agent continues monitoring in step 3. If the radio state of the mobile device is high (RRC_CONNECTED (in 4G), RRC_DCH (HSDPA, HSPAP) and FACH as HIGH (in 3G) for example), the on-going process is identified to involve traffic over the telecommunication network.

The agent then continues monitoring on the radio state and data activity starts the identification of the active on-going process, which either can be generated by the mobile device automatically or it can be a user generated process or a user interaction process.

The Radio Resource Control (RRC) protocol belongs to the Universal Mobile Telecommunication System, Wideband Code Division Multiple Access (W-CDMA (UMTS)) stack and handles the control plane signalling of Layer 3 between the User Equipment (UE) and the UMTS Terrestrial Radio Access Network (UTRAN).

The major functions of the RRC protocol include connection establishment and release functions, broadcast of system information, radio bearer establishment, reconfiguration and release, RRC connection mobility procedures, paging notification and release and outer loop power control. By means of the signalling functions, the RRC configures the user and control planes according to the network status and allows for Radio Resource Management strategies to be implemented.

In step 5, the identification of a user interaction process is started. First it is stated whether there is an on-going user interaction process, which is queryable.

If there is a queryable user interaction process, then the user interaction process can be identified directly from the snapshot and the process continues with step 7. An indication of this in e.g. an Android device can be that the ActivityManager.RunningServicelnfo, which gives information of the running processes, has a FLAG_FOREGROUND set on to indicate if it is a foreground process that the user is interacting with.

If it is not queryable, a list of all running processes in the mobile device is queried in step 6. This can be done with e.g. the windows command, the UNIX or LINUX ps command or some Android command as was explained in the summary section.

Then the processes/process from the top of the list is detected. The name of the networking service that the user is actively using in the user interaction process is identified.

If multiple processes are selected, then the one with the maximum generated traffic is selected and the name of the networking service that the user is trying to access in the user interaction process is identified.

In addition, step 6 involves foreground process identification. The foreground process identification network comprises detection of the user interaction process. An indication of a user interaction process is for example an uplink network packet is sent from the mobile device in attempting network access.

In step 7, the identified user interaction process is queried for additional information, for example detection of values for byte count detection, and/or packet count. This one is done directly if the process is queryable. If it is not queryable, then the information is gathered by for example taking a new snapshot of all the ongoing processes.

In step 8, the packet or byte count of the on-going identified user interaction process is queried from the stored snapshot.

In step 9, it is stated whether the (total) packet or byte count value is bigger than the one in the stored snapshot.

A new snapshot is stored as a situation report of a data activity moment of the process as in step 2, since this is an ongoing process, and the user could at some point switch on using some other application which might not have a specific network access offer.

If this is the case, then the process continues in step 10. If the identified user interaction process data flow or activity has not increased, the process returns to step 4 to monitor data activity and/or radio state.

In step 10, it is stated whether the identified user interaction process is in a list of processes decided to be ignored in the method.

If this is the case, then the user interaction process is ignored and the process returns to step 4 to monitor data activity and/or radio state.

If it is not in the list, then it is stated in step 11 whether the user interface process has been processed already.

If this is the case, then the user interaction process is ignored and the process returns to step 4 to monitor data activity and/or radio state.

If the user interaction process has not been broadcasted already, then the process will be marked as broadcasted in step 12.

In step 13, the process name and information is broadcasted to other systems. In this example one of the receiving systems is User Interface Manager 4 for processing and selecting offers for network access.

Figure 4 is a detailed flow scheme of an other embodiment of the invention.

Steps 1 - 4 of figure 4 are equal to steps 1 - 4 of figure 3.

In step 5, a new snapshot of the on-going processes of the mobile device are obtained and stored.

In step 6, it is stated whether there are processes with packet or byte count values in the new snapshot that are bigger than the ones in the snapshot stored in step 2.

If that is the case, a list of all running processes requiring access in the mobile device is created in step 7.

In step 8, the identification of a user interaction process is started. First it is stated whether there is an on-going user interaction process, which is queryable like in step 5 of figure 3. One indication of this in e.g. an Android operating system can be that the ActivityManager.RunningServicelnfo, giving information of the running processes, has a FLAG_FOREGROUND set on to indicate if it is a foreground process that the user is interacting with.

If the process is not queryable, the process continues with step 9.

In step 9, a number of processes from the top of the list of all running processes is detected. Depending on implementation there might be one or more processes given by the system as top running processes. The number of processes can be for example related to the number of processes known to be started by the user. These processes can also be chosen from those processes where the foreground flag has been turned on recently or which have been started recently.

In step 10, it is stated whether there is more than one process.

If that is the case, the one with the maximum generated traffic is selected in step 11 and the name of the networking service that the user is trying to access in the user interaction process is identified.

If it is stated in step 10, that there is only one process, the method continues directly in step 12.

If it was stated in step 8 that there was a queryable user interaction process, it can be identified directly and the process continues with step 12.

In step 12, it is stated whether the identified user interaction process is in the list of processes requiring access.

If the user interaction process is among the list of such processes, then in step 13, the user interaction process is marked on the list of processes requiring access created in step 7.

In step 14, the list of process names and information is broadcasted to other systems. In this example one of the receiving systems is User Interface Manager 4 for processing and selecting offers for network access.

The ability to show offers and sell data upon opening apps with data consumption is a useful approach in the invention. Network access can be provided and the invention is in the first hand meant for offering connecting the mobile device to the Internet.

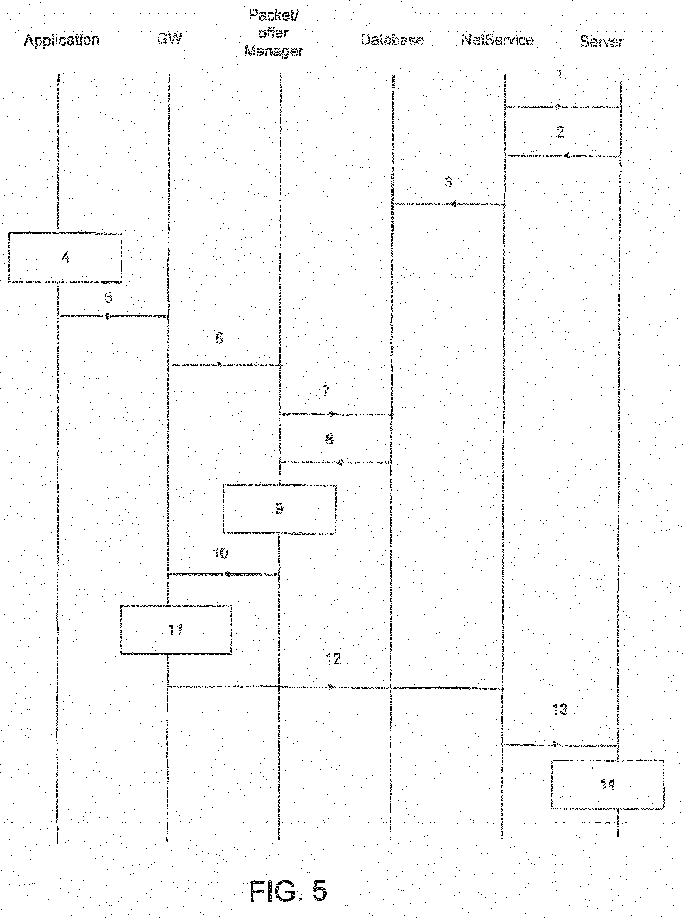

Figure 5 shows an example of a signal diagram for such a scenario.

The Net Service Module 7 of the mobile device 1 requests offers from the server 2 in signal 1.

In Signal 2, the Server 2 sends the current offers to the Net Service Module 7.

In signal 3, The Net Service module 7 stores the offers to the database 6 after that an application in the mobile device 1 has attempted for network access while the user is interacting with the application.

In step 4, the data sensor of the agent monitors the data activity of the on-going process in the mobile device, detects the on-going process to be a user interaction process, identifies the user interaction process to involve traffic over the telecommunication network, and analyzes the identified user interaction process with respect to the name of the process and factors for network access needs. A detailed description of how this is performed is presented above in connection with figures 3 and 4.

The process name is sent to the User Interface Manager 4 in signal 5 and further to the offer manager 5 in signal 6 for processing and selecting offers for network access.

In signals 7 and 8, the offer manager 5 fetches the stored offers from the database 6 for mapping in step 9, the analyzed network access needs, (which are analysed from the process name and other information like the data profile of that process, and/or contextual and historical user/usage information that has been stored to database from the server, net service and the offer manager), to available offers stored in a database, and for selecting one or more of the available network access offers.

The offer manager presents them to the User Interface Manager (UI) 4 in signal 10.

The UI manager 4 presents the offer(s) on the screen of the mobile device in step 11.

After the user has accepted an offer, the UI manager pushes the selected purchase request of that offer to the Net Service module 7 in signal 12 where it gets forwarded to the server 2 in signal 13. The Net Service module 7 is responsible for making requests to server.

In step 14, the server 2 approves the purchase request and sends instructions to all the appropriate components. These components include for example a charging entity, gateways, a Subscriber Profile Repository (SPR), the Policy and Charging Rules Function (PCRF), and Customer relationship management (CRM).

## Claims

1. Method of identifying access request of an application (12') on a mobile device (1) in a telecommunication network, (8,10) the method comprising the following steps as performed by an agent in the mobile device **characterised in that**
a) detecting whether one or more on-going processes in the mobile device involves traffic over the telecommunication network,
b) identifying a user interaction process from all the on-going processes,
c) confirming the identified user interaction process to be said process that involves traffic over the telecommunication network, and
d) collecting information of the identified user interaction process regarding network access needs.

2. Method of claim 1 further **characterized by**
e) analyzing the identified user interaction process with respect to factors for network access needs,
f) mapping the analyzed network access needs to available offers stored in a database, and
g) selecting one or more of the available network access offers and presenting them on the screen of the mobile device.

3. Method of claim 1 or 2, **characterized by** the detecting in step a) being followed by taking a snapshot of the on-going processes of the mobile device and storing the snapshot as a situation report of a data activity moment of the process.

4. Method of claim 1, 2, or 3, **characterized in that** in the network traffic detection of step a), in it is identified whether the on-going process taking place in the mobile device is using a telephone network and/or the Internet or other data network.

5. Method of claim 1, 2, 3, or 4, **characterized in that** the network traffic detection of step a) is performed by monitoring the radio state and/or the data activity of the on-going process in the mobile device.

6. Method of claim 5, **characterized in that** the detection of data activity comprises detection the user interaction process sending an uplink network packet from the mobile device in attempting network access.

7. Method of claim 3, **characterized in that** the user interaction identification in step b) is identified directly from the snapshot if the networking service involved in the user interaction process is queryable.

8. Method of claim 1, 2, 3, 4, 5, 6, or 7, **characterized by** identifying a networking service involved in the user interaction process by making use of a list of running process and detecting a number of processes from the top of the list and selecting the one with the maximum generated traffic.

9. Method of claim 5, **characterized in that** the user interaction identification in step b) involves foreground process identification.

10. Method of claim 8 or 9, **characterized by** further identifying the name of the networking service that the user is trying to access in the user interaction process.

11. Method of claim 1, 2, 3, 4, 5, 6, 7, 8, 9, or 10, **characterized by** ignoring a user interaction process that is identified if it is in a list of processes decided to be ignored in the method.

12. Method of claim 1, 2, 3, 4, 5, 6, 7, 8, 9, or 10, **characterized by** ignoring a user interaction process that is detected to having been processed already.

13. Method of claim 1, 2, 3, 4, 5, 6, 7, 8, 9, 10, 11, or 12, **characterized by** querying the packet or byte count value of the on-going identified user interaction process.

14. Method of claim 13, **characterized in that** the confirmation in step c) takes place by comparing the queried packet or byte count value and the corresponding value in the stored snapshot.

15. Method of claim 14, further **characterized by** deciding to process the user interaction process if the packet or byte count value queried is bigger than the one in the stored snapshot.

16. Method of claim 2, 3, 4, 5, 6, 7, 8, 9, 10, 11, 12, 13, 14, or 15, **characteri zed** in that the analyzing being furthermore performed by analyzing use context and/or user behavior in connection with the identified network service as factors influencing on a decision of the type of network access offer.

17. Method of claim 2, 3, 4, 5, 6, 7, 8, 9, 10, 11, 12, 13, 14, 15, or 16, **characte rized** by the network access offer being realized in the form of a real-time trigger to the screen of the mobile device.

18. Method of claim 2, 3, 4, 5, 6, 7, 8, 9, 10, 11, 12, 13, 14, 15, 16, or 17, **chara cterized** by the method further comprising
h) the user accepting an allocated offer via the screen, and
i) the application sending the information of the accepted network access offer to the operator of the subscription of the mobile device for activation and charging purposes.

19. Method of claim 18, **characterized in that** when the user has accepted the offer in step h), the network access is provided for the user on a condition of performing a certain user action on the mobile device, the user action required to be performed being s a specified user action on the device consisting in paying for the network access, in clicking a link, in watching a video or in downloading an app.

20. System for identifying an access request of an application (12') on a mobile device (1) in a telecommunication (8,10) the system comprising an agent in a mobile device with means for **characterised in that** detecting whether one or more of the on-going processes involves traffic over the telecommunication network, identifying a user interaction process from all the on-going processes, confirming the identified user interaction process to be said process that involves traffic over the traffic over the telecommunication network, and collecting information of the identified user interaction process regarding network access needs.

21. System of claim 20, further **characterized by** means for analyzing the identified user interaction process with respect to factors for network access needs,
mapping the analyzed network access needs to available offers stored in a database, and,
selecting one or more of the available network access offers and presenting them on the screen of the mobile device for selection by the user for network connection.

22. System of claim 21, **characterized in that** the means in the agent comprises a data sensor with an algorithm for detecting a user interaction process in the mobile device, for identifying the user interaction process to involve traffic over the telecommunication network, for confirming the identified user interaction process to be said process that involves traffic over the traffic over the telecommunication network, and for collecting and analyzing information of the user interaction process regarding factors for network access needs.

23. System of claim 22, **characterized in that** the means in the agent comprises an offer manager with software for mapping the analyzed network access needs to available offers stored in a database, and
for selecting one or more of the available network access offers and presenting them on the screen of the mobile device.

## Patentansprüche

1. Verfahren zur Identifizierung einer Zugriffsanforderung einer Anwendung (12') auf einer mobilen Vorrichtung (1) in einem Telekommunikationsnetz (8, 10), wobei das Verfahren die folgenden Schritte aufweist, die von einem Agenten in der mobilen Vorrichtung durchgeführt werden, **gekennzeichnet durch**
a) Erfassen, ob einer oder mehrere laufende Prozesse in der mobilen Vorrichtung Datenverkehr über das Telekommunikationsnetz einbeziehen,
b) Identifizieren eines Benutzerinteraktionsprozesses aus allen laufenden Prozessen,
c) Bestätigen, dass der identifizierte Benutzerinteraktionsprozess der Prozess ist, der Datenverkehr über das Telekommunikationsnetz einbezieht, und
d) Sammeln von Informationen über den identifizierten Benutzerinteraktionsprozess bezüglich Netzzugriffsanforderungen.

2. Verfahren nach Anspruch 1, ferner **gekennzeichnet durch**
e) Analysieren des identifizierten Benutzerinteraktionsprozesses in Bezug auf Faktoren für Netzzugriffsanforderungen,
f) Abbilden der analysierten Netzzugriffsanforderungen auf verfügbare Angebote, die in einer Datenbank gespeichert sind, und
g) Auswählen eines oder mehrerer der verfügbaren Netzzugriffsangebote und Darstellen dieser auf dem Bildschirm der mobilen Vorrichtung.

3. Verfahren nach Anspruch 1 oder 2, **dadurch gekennzeichnet, dass** dem Erfassen in Schritt a) ein Aufnehmen eines Schnappschusses der laufenden Prozesse der mobilen Vorrichtung und Speichern des Schnappschusses als Situationsbericht eines Moments der Datenaktivität der Prozesse folgt.

4. Verfahren nach Anspruch 1, 2 oder 3, **dadurch gekennzeichnet, dass**, bei der Erfassung des Datenverkehrs des Netzes von Schritt a), identifiziert wird, ob der laufende Prozess, der in der mobilen Vorrichtung stattfindet, ein Telefonnetz und/oder das Internet oder ein anderes Datennetz verwendet.

5. Verfahren nach Anspruch 1, 2, 3 oder 4, **dadurch gekennzeichnet, dass** die Erfassung des Datenverkehrs des Netzes von Schritt a) durch Überwachen des Funkzustands und/oder der Datenaktivität des laufenden Prozesses in der mobilen Vorrichtung durchgeführt wird.

6. Verfahren nach Anspruch 5, **dadurch gekennzeichnet, dass** die Erfassung der Datenaktivität eine Erfassung, dass der Benutzerinteraktionsprozess ein Aufwärtsstrecken-Netzpaket von der mobilen Vorrichtung sendet, um einen Netzzugriff zu versuchen, aufweist.

7. Verfahren nach Anspruch 3, **dadurch gekennzeichnet, dass** die Benutzerinteraktionsidentifikation in Schritt b) direkt aus dem Schnappschuss identifiziert wird, wenn der in den Benutzerinteraktionsprozess einbezogene Netzdienst abfragbar ist.

8. Verfahren nach Anspruch 1, 2, 3, 4, 5, 6 oder 7, **gekennzeichnet durch** Identifizieren eines in den Benutzerinteraktionsprozess einbezogenen Netzdienstes unter Verwendung einer Liste eines laufenden Prozesses und Erfassen einer Anzahl von Prozessen von oben auf der Liste und Auswählen desjenigen mit dem maximalen generierten Datenverkehr.

9. Verfahren nach Anspruch 5, **dadurch gekennzeichnet, dass** die Benutzerinteraktionsidentifikation in Schritt b) eine Vordergrundprozessidentifikation einbezieht.

10. Verfahren nach Anspruch 8 oder 9, ferner **gekennzeichnet durch** Identifizieren des Namens des Netzdienstes, auf den der Benutzer versucht, im Benutzerinteraktionsprozess zuzugreifen.

11. Verfahren nach Anspruch 1, 2, 3, 4, 5, 6, 7, 8, 9 oder 10, **gekennzeichnet durch** Ignorieren eines identifizierten Benutzerinteraktionsprozesses, wenn er sich auf einer Liste von Prozessen befindet, über die entschieden wurde, in dem Verfahren ignoriert zu werden.

12. Verfahren nach Anspruch 1, 2, 3, 4, 5, 6, 7, 8, 9 oder 10, **gekennzeichnet durch** Ignorieren eines Benutzerinteraktionsprozesses, der erfasst wurde, bereits verarbeitet zu sein.

13. Verfahren nach Anspruch 1, 2, 3, 4, 5, 6, 7, 8, 9, 10, 11 oder 12, **gekennzeichnet durch** Abfragen des Paket-oder Byte-Zählwerts des laufenden identifizierten Benutzerinteraktionsprozesses.

14. Verfahren nach Anspruch 13, **dadurch gekennzeichnet, dass** die Bestätigung in Schritt c) durch Vergleichen des abgefragten Paket- oder Byte-Zählwerts und des entsprechenden Werts in dem gespeicherten Schnappschuss erfolgt.

15. Verfahren nach Anspruch 14, ferner **gekennzeichnet durch** Entscheiden, den Benutzerinteraktionsprozess zu verarbeiten, wenn der abgefragte Paket- oder Byte-Zählwert größer als der in dem gespeicherten Schnappschuss ist.

16. Verfahren nach Anspruch 2, 3, 4, 5, 6, 7, 8, 9, 10, 11, 12, 13, 14 oder 15, **dadurch gekennzeichnet, dass** das Analysieren ferner durch Analysieren des Benutzungskontextes und/oder Benutzerverhaltens in Verbindung mit dem identifizierten Netzdienst als Faktoren, die eine Entscheidung über die Art des Netzzugriffsangebots beeinflussen, durchgeführt wird.

17. Verfahren nach Anspruch 2, 3, 4, 5, 6, 7, 8, 9, 10, 11, 12, 13, 14, 15 oder 16, **dadurch gekennzeichnet, dass** das Netzzugriffsangebot in Form eines Echtzeit-Triggers auf dem Bildschirm der mobilen Vorrichtung realisiert wird.

18. Verfahren nach Anspruch 2, 3, 4, 5, 6, 7, 8, 9, 10, 11, 12, 13, 14, 15, 16 oder 17, **dadurch gekennzeichnet, dass** das Verfahren ferner aufweist
h) der Benutzer akzeptiert ein zugewiesenes Angebot über den Bildschirm, und
i) die Anwendung sendet, für Aktivierungs- und Ladezwecke, die Information des akzeptierten Netzzugriffsangebots an den Betreiber des Abonnements der mobilen Vorrichtung.

19. Verfahren nach Anspruch 18, **dadurch gekennzeichnet, dass**, wenn der Benutzer das Angebot in Schritt h) akzeptiert hat, der Netzzugriff für den Benutzer unter der Bedingung bereitgestellt wird, dass eine bestimmte Benutzeraktion auf der mobilen Vorrichtung durchgeführt wird, wobei erforderlich ist, dass die Benutzeraktion als eine spezifizierte Benutzeraktion auf der Vorrichtung durchgeführt wird, die darin besteht, für den Netzzugriff zu bezahlen, auf einen Link zu klicken, ein Video anzusehen, oder eine App herunterzuladen.

20. System zum Identifizieren einer Zugriffsanforderung einer Anwendung (12') auf einer mobilen Vorrichtung (1) in einer Telekommunikation (8,10), wobei das System einen Agenten in einer mobilen Vorrichtung aufweist, der Mittel aufweist zum
**dadurch gekennzeichnet**
Erfassen, ob einer oder mehrere der laufenden Prozesse Datenverkehr über das Telekommunikationsnetz einbeziehen,
Identifizieren eines Benutzerinteraktionsprozesses von allen laufenden Prozessen,
Bestätigen, dass der identifizierte Benutzerinteraktionsprozess der Prozess ist, der Datenverkehr über den Datenverkehr über das Telekommunikationsnetz einbezieht, und
Sammeln von Informationen über den identifizierten Benutzerinteraktionsprozess bezüglich Netzzugriffsanforderungen.

21. System nach Anspruch 20, ferner **gekennzeichnet durch** Mittel zum
Analysieren des identifizierten Benutzerinteraktionsprozesses in Bezug auf Faktoren für Netzzugriffsanforderungen,
Abbilden des analysierten Netzzugriffs auf verfügbare Angebote, die in einer Datenbank gespeichert sind, und,
Auswählen eines oder mehrerer verfügbarer Netzzugriffsangebote und Darstellen dieser auf dem Bildschirm der mobilen Vorrichtung zur Auswahl **durch** den Benutzer für eine Netzverbindung.

22. System nach Anspruch 21, **dadurch gekennzeichnet, dass** die Mittel in dem Agenten einen Datensensor aufweisen, der einen Algorithmus aufweist zum Detektieren eines Benutzerinteraktionsprozesses in der mobilen Vorrichtung, zum Identifizieren des Benutzerinteraktionsprozesses, um Datenverkehr über das Telekommunikationsnetz einzubeziehen, zum Bestätigen, dass der identifizierte Benutzerinteraktionsprozess der Prozess ist, der Datenverkehr über den Datenverkehr des Telekommunikationsnetzes einbezieht, und zum Sammeln und Analysieren von Informationen des Benutzerinteraktionsprozesses bezüglich Faktoren für Netzzugriffsanforderungen.

23. System nach Anspruch 22, **dadurch gekennzeichnet, dass** die Mittel in dem Agenten einen Angebotsmanager aufweisen, der Software aufweist zum Abbilden der analysierten Netzzugriffsanforderungen auf verfügbare Angebote, die in einer Datenbank gespeichert sind, und
zum Auswählen eines oder mehrerer der verfügbaren Netzzugriffsangebote und Darstellen von diesen auf dem Bildschirm der mobilen Vorrichtung.

## Revendications

1. Procédé d'identification d'une demande d'accès d'une application (12') sur un dispositif mobile (1) dans un réseau de télécommunication (8, 10), **caractérisé en ce que** le procédé comprend les étapes suivantes qui sont effectuées par un agent dans le dispositif mobile :
a) la détection si un ou plusieurs processus en cours dans le dispositif mobile impliquent un trafic sur le réseau de télécommunication,
b) l'identification d'un processus d'interaction d'utilisateur à partir de tous les processus en cours,
c) la confirmation que le processus d'interaction d'utilisateur identifié est ledit processus qui implique un trafic sur le réseau de télécommunication, et
d) le recueil d'informations du processus d'interaction d'utilisateur identifié en ce qui concerne des besoins d'accès de réseau.

2. Procédé selon la revendication 1, **caractérisé en outre par** :
e) l'analyse du processus d'interaction d'utilisateur identifié en ce qui concerne des facteurs pour des besoins d'accès de réseau,
f) la mise en concordance des besoins d'accès de réseau analysés avec des offres disponibles mémorisées dans une base de données, et
g) la sélection d'une ou plusieurs des offres d'accès de réseau disponibles et leur présentation sur l'écran du dispositif mobile.

3. Procédé selon la revendication 1 ou 2, **caractérisé en ce que** la détection à l'étape a) est suivie de la prise d'un instantané des processus en cours du dispositif mobile et de la mémorisation de l'instantané en tant qu'un rapport de situation d'un moment d'activité de données du processus.

4. Procédé selon la revendication 1, 2 ou 3, **caractérisé en ce que**, dans la détection de trafic de réseau à l'étape a), il est identifié si le processus en cours se déroulant dans le dispositif mobile utilise un réseau téléphonique et/ou l'Internet ou un autre réseau de données.

5. Procédé selon la revendication 1, 2, 3, ou 4, **caractérisé en ce que** la détection de trafic de réseau à l'étape a) est effectuée par la surveillance de l'état radio et/ou de l'activité de données du processus en cours dans le dispositif mobile.

6. Procédé selon la revendication 5, **caractérisé en ce que** la détection d'activité de données comprend la détection de l'envoi, par le processus d'interaction d'utilisateur, d'un paquet de réseau de liaison montante depuis le dispositif mobile au cours d'une tentative d'accès de réseau.

7. Procédé selon la revendication 3, **caractérisé en ce que** l'identification d'interaction d'utilisateur à l'étape b) est identifiée directement à partir de l'instantané si le service de réseautage impliqué dans le processus d'interaction d'utilisateur est interrogeable.

8. Procédé selon la revendication 1, 2, 3, 4, 5, 6 ou 7, **caractérisé par** l'identification d'un service de réseautage impliqué dans le processus d'interaction d'utilisateur par l'utilisation d'une liste de processus en cours, la détection d'un nombre de processus depuis le haut de la liste et la sélection de l'un avec le trafic généré maximal.

9. Procédé selon la revendication 5, **caractérisé en ce que** l'identification d'interaction d'utilisateur à l'étape b) implique une identification de processus en avant-plan.

10. Procédé selon la revendication 8 ou 9, **caractérisé en outre par** l'identification du nom du service de réseautage auquel l'utilisateur essaye d'accéder dans le processus d'interaction d'utilisateur.

11. Procédé selon la revendication 1, 2, 3, 4, 5, 6, 7, 8, 9 ou 10, **caractérisé en ce qu'**un processus d'interaction d'utilisateur qui est identifié est ignoré s'il se trouve dans une liste de processus dont il est décidé qu'ils doivent être ignorés dans le procédé.

12. Procédé selon la revendication 1, 2, 3, 4, 5, 6, 7, 8, 9 ou 10, **caractérisé en ce qu'**un processus d'interaction d'utilisateur qui est détecté comme ayant déjà été traité est ignoré.

13. Procédé selon la revendication 1, 2, 3, 4, 5, 6, 7, 8, 9, 10, 11 ou 12, **caractérisé par** l'interrogation de la valeur de compte de paquets ou d'octets du processus d'interaction d'utilisateur identifié en cours.

14. Procédé selon la revendication 13, **caractérisé en ce que** la confirmation à l'étape c) se déroule par la comparaison de la valeur de compte de paquets ou d'octets interrogée à la valeur correspondante dans l'instantané mémorisé.

15. Procédé selon la revendication 14, **caractérisé en outre par** la décision de traiter le processus d'interaction d'utilisateur si la valeur de compte de paquets ou d'octets interrogée est supérieure à celle dans l'instantané mémorisé.

16. Procédé selon la revendication 2, 3, 4, 5, 6, 7, 8, 9, 10, 11, 12, 13, 14 ou 15, **caractérisé en ce que** l'analyse est en outre effectuée en analysant un contexte d'utilisation et/ou un comportement d'utilisateur en ce qui concerne le service de réseau identifié en tant que facteurs influençant une décision du type d'offre d'accès de réseau.

17. Procédé selon la revendication 2, 3, 4, 5, 6, 7, 8, 9, 10, 11, 12, 13, 14, 15 ou 16, **caractérisé en ce que** l'offre d'accès de réseau est réalisée sous la forme d'un déclenchement en temps réel à l'écran du dispositif mobile.

18. Procédé selon la revendication 2, 3, 4, 5, 6, 7, 8, 9, 10, 11, 12, 13, 14, 15, 16 ou 17, **caractérisé en ce que** le procédé comprend en outre :
h) l'acceptation, par l'utilisateur, d'une offre allouée par l'intermédiaire de l'écran, et
i) l'envoi, par l'application, des informations de l'offre d'accès de réseau acceptée à l'opérateur de l'abonnement du dispositif mobile à des fins d'activation et de facturation.

19. Procédé selon la revendication 18, **caractérisé en ce que**, lorsque l'utilisateur a accepté l'offre à l'étape h), l'accès de réseau est fourni à l'utilisateur à condition d'exécuter une certaine action d'utilisateur sur le dispositif mobile, l'action d'utilisateur à exécuter étant une action d'utilisateur spécifiée sur le dispositif consistant à effectuer un paiement pour l'accès de réseau, à cliquer sur un lien, à regarder une vidéo ou à télécharger une app.

20. Système d'identification d'une demande d'accès d'une application (12') sur un dispositif mobile (1) dans un réseau de télécommunication (8, 10), **caractérisé en ce que** le système comprend un agent dans un dispositif mobile avec des moyens pour effectuer :
la détection si un ou plusieurs processus en cours impliquent un trafic sur le réseau de télécommunication,
l'identification d'un processus d'interaction d'utilisateur à partir de tous les processus en cours,
la confirmation que le processus d'interaction d'utilisateur identifié est ledit processus qui implique un trafic sur le réseau de télécommunication, et
le recueil d'informations du processus d'interaction d'utilisateur identifié en ce qui concerne des besoins d'accès de réseau.

21. Système selon la revendication 20, **caractérisé en outre par** des moyens pour effectuer :
l'analyse du processus d'interaction d'utilisateur identifié en ce qui concerne des facteurs pour des besoins d'accès de réseau,
la mise en concordance des besoins d'accès de réseau analysés avec des offres disponibles mémorisées dans une base de données, et
la sélection d'une ou plusieurs des offres d'accès de réseau disponibles et leur présentation sur l'écran du dispositif mobile pour la sélection par l'utilisateur pour une connexion de réseau.

22. Système selon la revendication 21, **caractérisé en ce que** les moyens dans l'agent comprennent un capteur de données avec un algorithme pour effectuer la détection d'un processus d'interaction d'utilisateur dans le dispositif mobile, l'identification que le processus d'interaction d'utilisateur implique un trafic sur le réseau de télécommunication, la confirmation que le processus d'interaction d'utilisateur identifié est ledit processus qui implique un trafic sur le réseau de télécommunication, et le recueil et l'analyse d'informations du processus d'interaction d'utilisateur en ce qui concerne des facteurs pour des besoins d'accès de réseau.

23. Système selon la revendication 22, **caractérisé en ce que** les moyens dans l'agent comprennent un gestionnaire d'offre avec un logiciel pour effectuer la mise en concordance des besoins d'accès de réseau analysés avec des offres disponibles mémorisées dans une base de données, et
la sélection d'une ou plusieurs des offres d'accès de réseau disponibles et leur présentation sur l'écran du dispositif mobile.
